# EUROPÄISCHE PATENTSCHRIFT

(11) **EP 1 110 039 B1**
(45) Veröffentlichungstag und Bekanntmachung des Hinweises auf die Patenterteilung: **11.12.2002**
(21) Anmeldenummer: 99941311.5
(22) Anmeldetag: 03.09.1999
(51) Int. Cl.: F25B 15/10

(54) **ABSORPTIONSKÄLTEMASCHINE**
ABSORPTION REFRIGERATION MACHINE
MACHINE FRIGORIFIQUE A ABSORPTION

(30) Priorität: 04.09.1998 AT 150498; 19.05.1999 AT 88999
(43) Veröffentlichungstag der Anmeldung: 27.06.2001
(73) Patentinhaber: Solarfrost International Ltd., Tortola (VG)
(72) Erfinder: Kunze, Gerhard, 3012 Wolfsgraben (AT)
(74) Vertreter: Gibler, Ferdinand, Dipl.Ing. Dr. techn.
(86) Internationale Anmeldenummer: AT9900213
(87) Internationale Veröffentlichungsnummer: WO00014458

(56) Entgegenhaltungen:
- EP-A- 0 837 294
- CH-A- 454 192
- CH-A- 475 527
- CH-A- 558 922
- DE-B- 1 089 787
- DE-B- 1 132 161
- DE-C- 481 607
- DE-C- 534 091
- DE-C- 621 239
- FR-A- 772 935
- FR-A- 839 530
- GB-A- 888 601
- US-A- 2 274 660
- US-A- 2 278 661
- US-A- 2 772 544

## Beschreibung

Die Erfindung betrifft eine Absorptionskältemaschine mit einem Generator zur Verdampfung eines in einem Lösungsmittel gelösten Kältemittels, einem diesem Generator nachgeordneten Lösungsmittelabscheider, in welchem die Trennung des Lösungsmittels von dem Kältemittel vorgenommen wird, einem Kondensator zur Verflüssigung des Kältemittels, einem Verdampfer, in welchem das Kältemittel mittels Trockengas und unter Abkühlung verdampft wird, gegebenenfalls einem ersten Gaswärmetauscher, und einem Absorber, in welchem der abgereicherten Mischung aus Kältemittel und Lösungsmittel das abgedampfte Kältemittel zugeführt wird, welche im Generator erneut verdampft wird.

Eine solche Absorptionskältemaschine wurde beispielsweise durch die **CH-A-558 922** bekannt. Es ist hier ein als Kocher bezeichneter Generator vorgesehen, welcher über eine Dampfleitung mit einem Kondensator verbunden ist. Das in diesem Kondensator verflüssigte Kältemittel fließt in den nachgeordneten Verdampfer. Der Ausgang dieses Verdampfers ist über einen Gaswärmetauscher mit einer Absorberschlange verbunden, die in ein Absorbergefäß mündet. Der Ausgang dieses Absorbergefäßes ist über einen Flüssigkeitswärmetauscher an den Kocher geführt.

Zum Betreiben einer bekannten Absorptionskältemaschine nach dem System Platen-Munters ist eine Wärmequelle mit einer Temperatur von weit über 100 Grad Celsius erforderlich. Bei Temperaturen von 100 Grad Celsius und darunter geht der Wirkungsgrad hingegen gegen Null. Vorhandene Wärmequellen mit niedrigen Temperaturen, wie etwa heißes Wasser aus industriellen Abwärme-Systemen, z.B. Fernwärme, Solarheizungen od. dgl. sind daher für die herkömmlichen Ausführungen dieser Absorptionskältemaschinen ungeeignet, da die benötigten hohen Temperaturen im allgemeinen nicht erreicht werden können.

Aufgabe der Erfindung ist es daher, eine Absorptionskältemaschine der eingangs genannten Art anzugeben, mit der auch bei relativ geringer Temperatur, vorzugsweise bei ungefähr 75 Grad Celsius, ein hoher Wirkungsgrad erzielbar ist.

Erfindungsgemäß wird dies dadurch erreicht, daß der Ausgang des Verdampfers oder der Ausgang des gegebenenfalls nach dem Verdampfer angeordneten, ersten Gaswärmetauschers und der dem Lösungsmittelabscheider abgewandte Ausgang des Generators in einen, in den Absorber führenden Bypass münden, wobei das vom Verdampfer gegebenenfalls über den ersten Gaswärmetauscher kommende Gemisch aus verdampftem Kältemittel und Trockengas zum Ausgang des Generators und durch den Bypass geführt wird, wo das Gasgemisch mit der heißen, teilweise ausgegasten, vom Generator kommenden Lösung in Kontakt gebracht wird und diesem weiteres Kältemittel entzieht.

Das vom Verdampfer über den ersten Gaswärmetauscher kommende Gemisch wird somit nicht direkt zum Absorber sondern zum Ausgang des Generators und dort durch den Bypass geführt und entzieht der vom Generator kommenden Lösung Kältemittel. Auf den ersten Gaswärmetauscher kann auch verzichtet werden, sodaß in diesem Fall das Gemisch vom Ausgang des Verdampfers zum Bypass-Eingang geführt wird. In beiden Fällen ist es möglich, im Bereich des Absorber-Eingangs eine niedrige Lösungskonzentration, welche Voraussetzung für eine niedrige Kühltemperatur ist, zu erreichen, ohne den Generator stark aufheizen zu müssen. Wärmequellen niedriger Temperatur können daher für die erfindungsgemäße Absorptionskältemaschine Anwendung finden. Durch die niedrige Generatortemperatur wird die Menge des mitverdampften Wassers verringert, wodurch ein Wirkungsgradverlust im Verdampfer vermieden wird.

In weiterer Ausbildung der Erfindung kann vorgesehen sein, daß ein zweiter Gaswärmetauscher vorgesehen ist, dessen Primärseite zwischen dem Ausgang des Verdampfers oder gegebenenfalls dem Ausgang des ersten Gaswärmetauschers und dem Eingang des Bypasses und dessen Sekundärseite zwischen dem Ausgang des Bypasses und dem Eingang des Absorbers angeordnet sind, sodaß das vom Bypass kommende Gasgemisch gekühlt wird. Die Kühlung des Gasgemisches ermöglicht es, die Anreicherung der vom Generator kommenden abgereicherten Flüssigkeit zu verbessern.

Der Bypass ermöglicht eine niedrige Betriebstemperatur verursacht aber auch Verlustenergie. Gemäß einer weiteren Ausführungsform der Erfindung kann vorgesehen sein, daß zwischen dem Ausgang des Verdampfers und dem Eingang des Absorbers bzw. zwischen dem Eingang und dem Ausgang des Bypasses ein Regulierventil angeordnet ist, mit dem die Menge des durch den Bypass umgeleiteten Gases dosierbar ist, wobei der nicht umgeleitete Teil direkt zum Absorber fließt. Damit ist eine Regulierung der Bypass-Wirkung auf die gerade erforderliche Temperaturabsenkung der Versorgungswärmequelle möglich.

Gemäß einer Variante der Erfindung kann das Regulierventil ein den Bypass kurzschließendes Durchgangsventil sein, wodurch bei geöffnetem Ventil der Bypass unwirksam wird und bei geschlossenem Ventil der Bypass voll zur Wirkung kommen kann.

Nach einer anderen Variante der Erfindung kann das Regulierventil ein Dreiwegventil sein, welches das vom Verdampfer kommende Gasgemisch zwischen dem Fluß zum Bypass und dem Fluß zum Absorber aufteilt. Dadurch kann der Bypass in seiner Wirkung sehr genau eingestellt werden.

Zur Vergrößerung der Kontaktfläche zwischen dem den Bypass durchströmenden Gasgemisch und der diesen durchfließenden Flüssigkeit kann die Innenwand des Bypass-Rohres mit einem ammoniakresistentem Fasermaterial beschichtet sein, wobei das ammoniakresistente Fasermaterial vorzugsweise durch ein Glasfaservlies gebildet ist, welches die Anforderungen an eine große Oberfläche und hohe Beständigkeit erfüllt.

Ein weiteres Merkmal der Erfindung kann darin bestehen, daß im Inneren des Bypass-Rohres eine an dessen Innenwand anliegende Schraubenfeder angeordnet ist, wobei das ammoniakresistente Fasermaterial zwischen der Innenwand und der Schraubenfeder eingespannt ist.

Auf diese Weise wird verhindert, daß sich der Bypass-Durchflußquerschnitt für das den Bypass durchströmende Gas verringert.

Ein besonders hoher Wirkungsgrad wird gemäß einer weiteren Ausführungsform der Erfindung dadurch erreicht, daß das Kältemittel durch Ammoniak und das Lösungsmittel durch Wasser gebildet ist.

Weiters kann vorgesehen sein, daß der Bypass beheizbar ist, wodurch die Bypass-Temperatur auf einen Wert einstellbar ist, bei der das einströmende Gasgemisch der abgereicherten Lösung einen sehr hohen Anteil an Ammoniak entzieht.

Nachfolgend wird die Erfindung anhand der in den Zeichnungen dargestellten Ausführungsbeispiele eingehend erläutert. Es zeigt dabei
Fig.1 eine schematische Darstellung einer Ausführungsform der erfindungsgemäßen Absorptionskältemaschine;
Fig.2 eine schematische Darstellung einer weiteren Ausführungsform der erfindungsgemäßen Absorptionskältemaschine;
Fig.3 ein Diagramm über die experimentell erzielten Wirkungsgrade der erfindungsgemäßen Absorptionskältemaschine bei verschiedenen Vorlauftemperaturen in Abhängigkeit von der Einstellung des Bypassregulierventils;
Fig.4 einen Schnitt durch einen Bypass in Schrägrißdarstellung und
Fig.5 eine Ausführungsform einer Blasenpumpe.

Die im folgenden beschriebene Absorptionskältemaschine arbeitet weitgehend wie das klassische System von Platen und Munters, das unter anderem im Absorberkühlschrank von Elektrolux® und Servel® zur Anwendung gekommen und vielfach dokumentiert worden ist.

Die Absorptionskältemaschine umfaßt einen Generator 7 zur Verdampfung eines in einem Lösungsmittel gelösten Kältemittels mit einer Blasenpumpe 1, einen Lösungsmittelabscheider 2, in welchem die Trennung des Lösungsmittels von dem Kältemittel vorgenommen wird, einen Kondensator 3 zur Verflüssigung des Kältemittels, einen Verdampfer 4, in welchem das Kältemittel mittels Trockengas und unter Abkühlung verdampft wird, einen ersten Gaswärmetauscher 6 und einen Absorber 5, in welchem der abgereicherten Mischung aus Kältemittel und Lösungsmittel das verdampfte Kältemittel zugeführt wird, welche Mischung im Generator 7 erneut verdampft wird.

Zum besseren Verständnis wird die Erfindung anhand eines Ausführungsbeispiels erklärt, in welchem das Lösungsmittel durch Wasser und das Kältemittel durch Ammoniak gebildet ist. Im Rahmen der Erfindung können aber auch andere geeignete Lösungs- und Kältemittel zur Anwendung gelangen.

Erfindungsgemäß ist vorgesehen, daß der Ausgang des nach dem Verdampfer 4 angeordneten, ersten Gaswärmetauschers 6 und der Ausgang des Generators 7 in einen, in den Absorber 5 führenden Bypass 8 münden, wobei das vom Verdampfer 4 über den ersten Gaswärmetauscher 6 kommende Gemisch aus verdampftem Kältemittel und Trockengas zum Ausgang des Generators 7 und dort durch den Bypass 8 geführt wird, wo das Gasgemisch mit der heißen, teilweise ausgegasten, vom Generator 7 kommenden Lösung in Kontakt gebracht wird und diesem weiteres Kältemittel entzieht.

Dadurch kann die erfindungsgemäße Absorptionskältemaschine mit einer relativ niedrigeren Generatorheiztemperatur, die unter 100 Grad Celsius liegen kann, betrieben werden.

Es kann aber auch auf den ersten Gaswärmetauscher 6 verzichtet werden, in welchem Fall der Ausgang des Verdampfers 4 direkt in den Bypass 8 mündet.

In der Blasenpumpe 1, die im gezeigten Ausführungsbeispiel aus einem oder mehreren parallelen und vertikalen Röhrchen gebildet ist, wird einer konzentrierten Ammoniaklösung, falls die aus dem Wärmetauscher 11 stammende Wärme nicht ausreicht, Wärme zugeführt, wodurch sich in der Blasenpumpe 1 Ammoniakgasblasen bilden, deren Volumen nur wenige Prozent im Vergleich zur Gesamtgasmenge, die nachfolgend im Generator 7 freigesetzt wird, beträgt. Die aufsteigenden Ammoniakgasblasen führen die Lösung durch die dünnen Röhrchen aufwärts in einen Wasserabscheider 2. Der vom Wasser getrennte Ammoniak strömt durch ein Steigrohr 9 weiter aufwärts zu einem Kondensator 3, wo er durch Abkühlung verflüssigt wird. Der flüssige Ammoniak fließt durch ein U-Rohr 19 abwärts in den Verdampfer 4, wo er als dünner Film die Wand eines Rohres benetzt, durch das ein Trockengas, z.B. Wasserstoffgas strömt. Dabei wird entstehender Ammoniakdampf kontinuierlich weggeführt, was zu einer Abkühlung des Verdampfers 4 führt, wodurch der eigentliche Kühlprozeß der erfindungsgemäßen Maschine aufrechterhalten wird. Das Gemisch aus Ammoniakgas und Wasserstoff am unteren Ende des Verdampfers 4 ist spezifisch schwerer als das anzureichernde Gasgemisch das in den Verdampfer 4 einströmt, wodurch der Wasserstoffkreislauf in Gang gehalten wird.

In einem herkömmlichen System würde das Gasgemisch direkt zum Absorber 5 weiterfließen. In der erfindungsgemäßen Kälteabsorptionsmaschine zweigt es aber nach einem ersten Gaswärmetauscher 6 in Richtung zum Generator 7 ab, wo es in einem Bypass 8 im Gleich- oder Gegenstrom der heißen, halb ausgegasten Lösung, die aus dem Generator 7 kommt, aufgrund der Temperatur- und konzentrationsbedingten Dampfdruckverhältnisse noch weiteren Ammoniak entzieht.

Dabei ist zu beachten, daß das dabei schwerer werdende Gas nicht zu hoch gehoben werden darf, weil dies seine Flußgeschwindigkeit verringern könnte.

So ist es möglich, im oberen Teil des Absorbers 5 eine niedrige Lösungskonzentration zu erreichen, welche Voraussetzung für eine niedrige Kühltemperatur ist, ohne den Generator 7 stark aufheizen zu müssen. Durch diese niedrigere Generatortemperatur wird die Menge des mitverdampften Wassers beschränkt, wodurch eine anschließende Rektifizierung des Wasser-Ammoniak-Dampfgemisches im Steigrohr 9 unnötig und ein eventueller späterer Wirkungsgradverlust durch Wasser im Verdampfer vermieden wird.

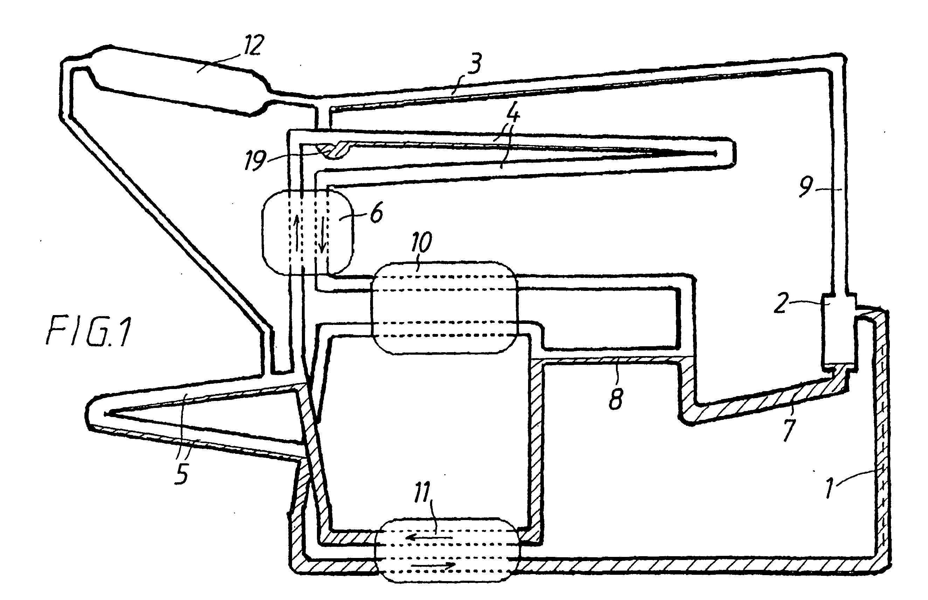

Das über den Verdampfer und gegebenenfalls über den ersten Gaswärmetauscher 6 kommende Gemisch aus Ammoniakgas und Wasserstoff wird im in Fig.1 gezeigten Ausführungsbeispiel zusätzlich über die Primärseite eines zweiten Gas-Wärmetauschers 10 zum Ausgang des Generators 7 dann im Gleich- oder Gegenstrom durch den Bypass 8 geführt, sowie danach zur Abkühlung durch die Sekundärseite des zweiten Gas-Wärmetauschers 10 weiter zum Absorber 5 geleitet, wo es seinen Ammoniaküberschuß wieder an die vom Bypass 8 kommende schwache Lösung abgibt.

Der Absorber 5 muß in diesem Fall etwas größer dimensioniert sein, als bei einem herkömmlichen System. Da das vom Bypass 8 in den Absorber 5 einströmende Gasgemisch einen höheren Ammoniakdampfdruck hat, als im herkömmlichen Platen-Munters-System, und von unten in den Absorber 5 strömt, hat die Lösung, die aus diesem Absorberteil ausfließt, eine höhere Konzentration, was es später im Generator 7 erlaubt, den Ausgasprozeß mit niedrigerer Temperatur zu betreiben. Vom Absorber 5 geht die Lösung durch den Flüssigkeitswärmetauscher 11 zur Blasenpumpe 1. Dort wird sie gehoben und nach dem Wasserabscheider 2 fließt die durch die Blasenbildung in der Blasenpumpe 1 nur leicht geschwächte Lösung zum Generator 7, wo der eigentliche Ausgasungsprozeß durch Erhitzen stattfindet.

Ein zwischen dem Kondensatorende 3 und dem Wasserstoffkreislauf angeordnetes Gasdruckausgleichsgefäß 12 soll verhindern, daß bei zu hoher Generatortemperatur zusätzlicher Ammoniak in den Wasserstoffkreislauf gelangt. In diesem Gasdruckausgleichsgefäß 12 überschichtet der leichtere Wasserstoff den schwereren Ammoniak, wodurch bei Temperaturschwankungen im Ammoniakkreislauf nur die Grenzschichte zwischen beiden Gasen verschoben wird. Es wird durch dieses Gasdruckausgleichsgefäß 12 also verhindert, daß bei niedrigen Generatortemperaturen der Wasserstoff durch das U-Rohr 19 in den Kondensator 3 gelangt und dort die Kondensation behindert.

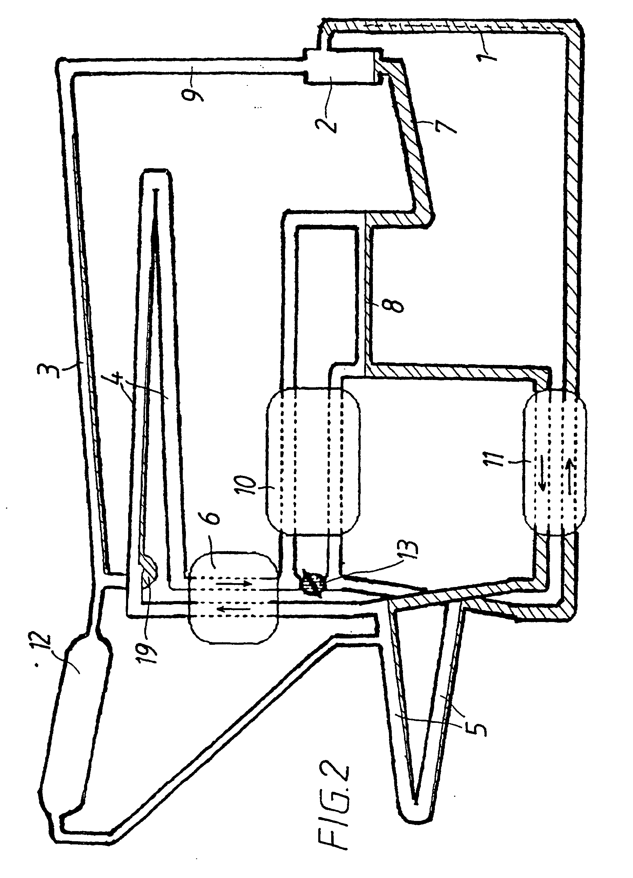

Im Ausführungsbeispiel gemäß Fig. 2 ist die Menge des zum Bypass 8 umgeleiteten Gasgemisches über ein Regulierventil 13 dosierbar, wobei der nicht umgeleitete Rest, wie beim bekannten System Platen-Munters direkt zum Absorber 5 fließt. Vorteilhaft kann das Regulierventil ein den Kurzschluß des Bypasses darstellendes Durchgangsventil sein. Der Bypass 8 ermöglicht zwar eine niedrigere Betriebstemperatur, verbraucht aber selbst Energie. Durch die Regulierung soll die Wirkung des Bypasses zur Temperaturabsenkung der Versorgungswärme so gering wie gerade nötig eingestellt werden.

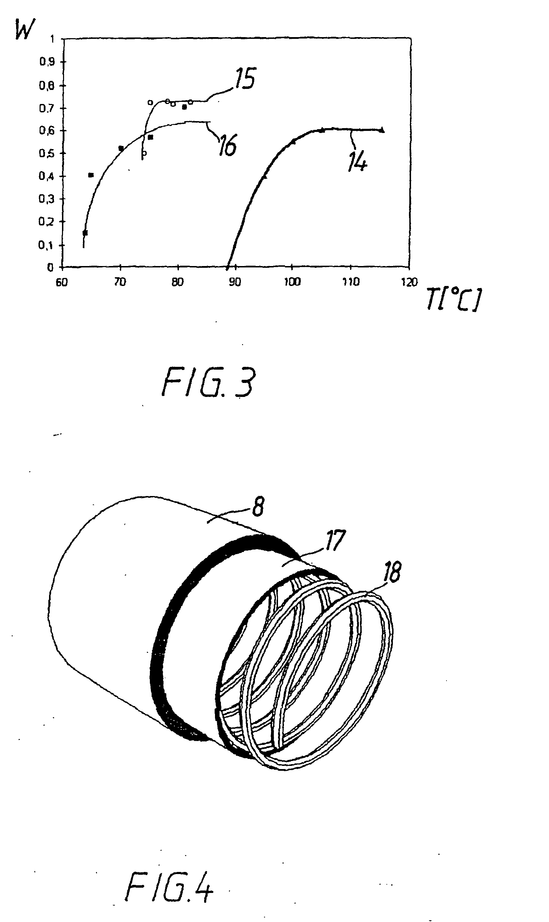

In Fig.3 wird in einem Diagramm ein gemessener Wirkungsgrad (Ordinatenachse) der erfindungsgemäßen Absorptionskältemaschine bei verschieden stark reguliertem Bypass und verschiedenen Heiztemperaturen (Abszissenachse) für Generator 7 dargestellt. Die Kurve 14 zeigt den Wirkungsgrad bei abgeschaltetem Bypass, Kurve 15 den Wirkungsgrad bei Einstellung des Regulierventiles 13 auf halbe Funktion des Bypasses, und Kurve 16 den Wirkungsgrad bei maximaler Funktion des Bypasses.

In Fig.4 ist eine mögliche Ausgestaltung zur Vergrößerung der Kontaktfläche zwischen Gasgemisch und Lösung im Bypass 8 dargestellt. Ein Vlies aus Glasfaser oder ähnlich ammoniakresistentem Material mit großer Oberfläche 17 wird vorzugsweise durch eine Spiralfeder 18 an die Wand des Bypassrohres 8 gedrückt.

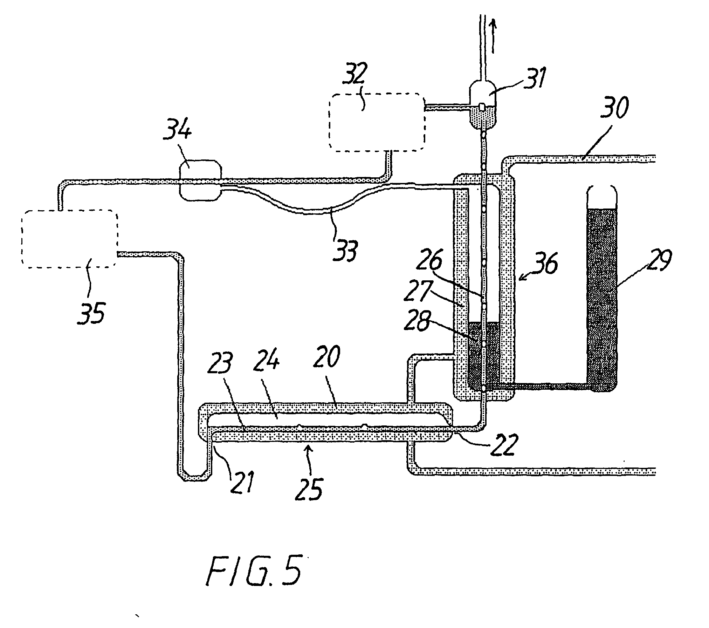

Fig.5 zeigt in schematischer Form eine Blasenpumpe. Die von einem Generator 32 über einen Absorber 35 einer Absorptionskältemaschine kommende Kältemittellösung fließt zum unteren Eingang einer Blasenpumpe 36, die mit einem vertikalen Pumprohr 26 versehen ist, welches durch ein flüssiges oder gasförmiges Wärmeträgermedium beheizbar und in welchem die Kältemittellösung, z.B. AmmoniakWasser, durch Blasenbildung nach oben bewegbar ist. Auch ein Bypass entsprechend der in Fig.1 bis 4 gezeigten Ausführungsform ist vorgesehen. Die Verwendung der Blasenpumpe erbringt jedoch auch bei herkömmlichen Absorptionskältemaschinen Vorteile.

Es ist vorgesehen, daß das untere Ende des Pumprohrs 26 mit einem länglichen, beheizbaren Pumpauslöse-Behälter 25 verbunden ist, welcher eine Einlaßund eine Auslaßöffnung 21, 22 aufweist und von der in das Pumprohr 26 fließenden Kältemittellösung in im wesentlichen horizontaler Richtung durchströmbar ist.

Die Einlaß- und die Auslaßöffnung 21, 22 sind dabei so angeordnet, daß eine im Pumpauslöse-Behälter 25 entstehende Gasblase 24 in diesem festgehalten wird, wobei der Flüssigkeitsspiegel der Kältemittellösung 23 im kalten Zustand unterhalb des aktiven Pumpenbereichs des Pumprohrs 26 liegt.

Der Pump-Auslösebehälter ist durch einen horizontal angeordneten Hohlzylinder 25 mit Deckflächen ausgebildet ist, wobei die Einlaß- und die Auslaßöffnung 21, 22 im unteren Bereich der gegenüberliegenden Deckflächen angeordnet sind. Jede andere geeignete Formgebung des Pump-Auslösebehälters ist möglich.

Die aus Fig.5 ersichtliche Gasblase 24 drückt den Flüssigkeitsspiegel bis in das Pumprohr 26 empor. Dort wird die Lösung vom Wärmeträgermedium in einem ersten konzentrischen Heizmantel 27 über einen teilweise gefüllten, zweiten konzentrischen Heizmantel 28 weiter erwärmt, wodurch Gasbläschen entstehen, welche die Flüssigkeit in einen Gasabscheider 31 befördern, von wo aus die teilweise entgaste Lösung zum Generator 32 zurückfließt, während das Gas in Richtung zu einem nicht dargestellten Kondensator aufwärts weiterströmt. Das Wärmeträgermedium 30 fließt zuerst durch den äußeren Heizmantel 27 der Blasenpumpe und von dort durch einen Heizmantel 20 des Pumpauslösers 25 zurück zur Wärmequelle. Eine kleine Temperaturdifferenz zwischen der Blasenpumpe und Pumpauslöse-Behälter 25 wird dadurch erreicht wird, daß das beheizende Wärmeträgermedium zuerst die Blasenpumpe und danach den Pumpauslöse-Behälter 25 durchströmt. Die Fließgeschwindigkeit der Wärmeträgerflüssigkeit kann einstellbar sein, um den Wärmefluß in die Blasenpumpe zu variieren.

Weiters kann ein Temperatursensor am Verbindungsrohr zwischen dem Generator 32 und dem Absorber 35 oder am Verbindungsrohr zwischen dem Generator 32 und dem nicht dargestellten Kondensator angeordnet sein, wodurch die Pumpenleistung in Abhängigkeit von der durch den Sensor gemessenen Temperatur regelbar ist.

Eine mögliche Ausführungsform umfaßt ein Gasthermometer 34. Dieses erwärmt sich an der Rohrleitung zwischen dem Generator 32 und dem Absorber 35 und das dadurch expandierende Gas verdrängt über die flexible Leitung 33 Wärmeträgerflüssigkeit aus dem inneren Heizmantel 28 in ein Druckausgleichsgefäß 29, wodurch die beheizte Oberfläche am Pumprohr 26 verkleinert wird. Auf diese Weise kann der Wärmefluß durch das Pumprohr 26 nach Bedarf eingestellt werden.

## Patentansprüche

1. Absorptionskältemaschine mit einem Generator (7) zur Verdampfung eines in einem Lösungsmittel gelösten Kältemittels, einem diesem Generator (7) nachgeordneten Lösungsmittelabscheider (2), in welchem die Trennung des Lösungsmittels von dem Kältemittel vorgenommen wird, einem Kondensator (3) zur Verflüssigung des Kältemittels, einem Verdampfer (4), in welchem das Kältemittel mittels Trockengas und unter Abkühlung verdampft wird, gegebenenfalls einem ersten Gaswärmetauscher (6), und einem Absorber (5), in welchem der abgereicherten Mischung aus Kältemittel und Lösungsmittel das Kältemittel zugeführt wird, welche im Generator (7) erneut verdampft wird, **dadurch gekennzeichnet, daß** der Ausgang des Verdampfers (4) oder der Ausgang des gegebenenfalls nach dem Verdampfer (4) angeordneten, ersten Gaswärmetauschers (6) und der dem Lösungsmittelabscheider (2) abgewandte Ausgang des Generators (7) in einen, in den Absorber (5) führenden Bypass (8) münden, wobei das vom Verdampfer (4) gegebenenfalls über den ersten Gaswärmetauscher (6) kommende Gemisch aus verdampftem Kältemittel und Trockengas zum Ausgang des Generators und durch den Bypass (8) geführt wird, wo das Gasgemisch mit der heißen, teilweise ausgegasten, vom Generator (7) kommenden Lösung in Kontakt gebracht wird und diesem weiteres Kältemittel entzieht.

2. Absorptionskältemaschine nach Anspruch 1, **dadurch gekennzeichnet, daß** ein zweiter Gaswärmetauscher (10) vorgesehen ist, dessen Primärseite zwischen dem Ausgang des Verdampfers (4) oder gegebenenfalls dem Ausgang des ersten Gaswärmetauschers (6) und dem Eingang des Bypasses (8) und dessen Sekundärseite zwischen dem Ausgang des Bypasses (8) und dem Eingang des Absorbers (5) angeordnet sind, sodaß das vom Bypass (8) kommende Gasgemisch gekühlt wird.

3. Absorptionskältemaschine nach Anspruch 1 oder 2, **dadurch gekennzeichnet, daß** zwischen dem Ausgang des Verdampfers (4) und dem Eingang des Absorbers (5) bzw. zwischen dem Eingang und dem Ausgang des Bypasses (8) ein Regulierventil (13) angeordnet ist, mit dem die Menge des durch den Bypass (8) umgeleiteten Gases dosierbar ist, wobei der nicht umgeleitete Teil direkt zum Absorber (5) fließt.

4. Absorptionskältemaschine nach Anspruch 3, **dadurch gekennzeichnet, daß** das Regulierventil ein den Bypass (8) kurzschließendes Durchgangsventil (13) ist.

5. Absorptionskältemaschine nach Anspruch 3, **dadurch gekennzeichnet, daß** das Regulierventil ein Dreiwegventil ist, welches das vom Verdampfer (4) kommende Gasgemisch zwischen dem Fluß zum Bypass (8) und dem Fluß zum Absorber (5) aufteilt.

6. Absorptionskältemaschine nach einem der vorhergehenden Ansprüche, **dadurch gekennzeichnet, daß** die Innenwand des Bypass-Rohres mit einem ammoniakresistentem Fasermaterial (17) beschichtet ist.

7. Absorptionskältemaschine nach Anspruch 6, **dadurch gekennzeichnet, daß** das ammoniakresistente Fasermaterial durch ein Glasfaservlies (17) gebildet ist.

8. Absorptionskältemaschine nach Anspruch 6 oder 7, **dadurch gekennzeichnet, daß** im Inneren des Bypass-Rohres (8) eine an dessen Innenwand anliegende Schraubenfeder (18) angeordnet ist, wobei das ammoniakresistente Fasermaterial (17) zwischen der Innenwand und der Schraubenfeder (18) eingespannt ist.

9. Absorptionskältemaschine nach einem der vorhergehenden Ansprüche, **dadurch gekennzeichnet, daß** das Kältemittel durch Ammoniak und das Lösungsmittel durch Wasser gebildet ist.

10. Absorptionskältemaschine nach einem der vorhergehenden Ansprüche, **dadurch gekennzeichnet, daß** der Bypass (8) beheizbar ist.

## Claims

1. An absorption refrigeration machine with a generator (7) for evaporating a refrigerant dissolved in a solvent, a solvent separator (2) which is disposed downstream of said generator (7) in which the separation of the solvent from the refrigerant is performed, a condenser (3) for liquefying the refrigerant, an evaporator (4) in which the refrigerant is evaporated by means of dry gas and under refrigeration, and optionally a first gas heat exchanger (6) and an absorber (5) in which the refrigerant is supplied to the depleted mixture of refrigerant and solvent which is evaporated again in the generator (7), **characterized in that** the output of the evaporator (4) or the output of the first gas heat exchanger (6) which is optionally disposed downstream of the evaporator (4) and the output of the generator (7) which is averted from the solvent separator (2) open into a bypass (8) leading to the absorber (5), with the mixture of evaporated refrigerant and dry gas which come optionally via the first gas heat exchanger (6) from the evaporator (4) being guided to the output of the generator and through the bypass (8) where the gas mixture is brought into contact with the hot, partly degassed, solution coming from the generator (7) and withdraws from the same further refrigerant.

2. An absorption refrigeration machine as claimed in claim 1, **characterized in that** a second gas heat exchanger (10) is provided whose primary side is disposed between the output of the evaporator (4) and, optionally, the output of the first gas heat exchanger (6) and the input of the bypass (8) and whose secondary side is disposed between the output of the bypass (8) and the input of the absorber (5), so that the gas mixture coming from the bypass (8) is refrigerated.

3. An absorption refrigeration machine as claimed in claim 1 or 2, **characterized in that** a control valve (13) is disposed between the output of the evaporator (4) and the input of the absorber (5) or between the input and the output of the bypass (8), with which valve the quantity of the gas bypassed through the bypass (8) can be dosed, with the non-bypassed portion flowing directly to the absorber (5).

4. An absorption refrigeration machine as claimed in claim 3, **characterized in that** the control valve is a straight-way valve (13) short-circuiting the bypass (8).

5. An absorption refrigeration machine as claimed in claim 3, **characterized in that** the control valve is a three-way valve which divides the gas mixture coming from the evaporator (4) between the flow to the bypass (8) and the flow to the absorber (5).

6. An absorption refrigeration machine as claimed in one of the preceding claims, **characterized in that** the inner wall of the bypass tube is coated with ammonia-resistant fiber material (17).

7. An absorption refrigeration machine as claimed in claim 6, **characterized in that** the ammonia-resistant fiber material is formed by a glass fiber web (17).

8. An absorption refrigeration machine as claimed in claim 6 or 7, **characterized in that** a helical spring (18) is disposed in the interior of the bypass tube (8) and rests on its inner wall, with the ammonia-resistant fiber material (17) being clamped between the inner wall and the helical spring (18).

9. An absorption refrigeration machine as claimed in one of the preceding claims, **characterized in that** the refrigerant is formed by ammonia and the solvent by water.

10. An absorption refrigeration machine as claimed in one of the preceding claims, **characterized in that** the bypass (8) is heatable.

## Revendications

1. Machine frigorifique à absorption comprenant un générateur (7) pour l'évaporation d'un réfrigérant en solution dans un solvant, un séparateur de solvant (2) monté en aval de ce générateur et dans lequel le solvant est séparé du réfrigérant, un condenseur (3) destiné à liquéfier le réfrigérant, un évaporateur (4) dans lequel le réfrigérant est évaporé au moyen de gaz sec et refroidi, avec éventuellement un premier échangeur de chaleur à gaz (6), et avec un absorbeur (5) dans lequel le réfrigérant est amené au mélange appauvri de réfrigérant et de solvant, qui est à nouveau évaporé dans le générateur (7), **caractérisée en ce que** la sortie de l'évaporateur (4) ou la sortie du premier échangeur de chaleur (6) éventuellement disposé après l'évaporateur (4) et la sortie du générateur (7) orientée à l'opposé du séparateur de solvant (2) débouchent dans une dérivation (8) menant dans l'absorbeur (5), le mélange de réfrigérant évaporé et de gaz sec venant de l'évaporateur (4) en passant éventuellement par le premier échangeur de chaleur (6) étant amené à la sortie du générateur et à travers la dérivation (8), où le mélange gazeux est mis en contact avec la solution chaude et partiellement dégazée provenant du générateur (7) et prélève encore davantage de réfrigérant dans celle-ci.

2. Machine frigorifique à absorption selon la revendication 1, **caractérisée en ce qu'**il est prévu un second échangeur de chaleur à gaz (10) dont le côté primaire est disposé entre la sortie de l'évaporateur (4) ou éventuellement la sortie du premier échangeur de chaleur (6) et l'entrée de la dérivation (8) et dont le côté secondaire est disposé entre la sortie de la dérivation (8) et l'entrée de l'absorbeur (5), de telle sorte que le mélange gazeux provenant de la dérivation (8) soit refroidi.

3. Machine frigorifique à absorption selon la revendication 1 ou 2, **caractérisée en ce qu'**il est prévu entre la sortie de l'évaporateur (4) et l'entrée de l'absorbeur (5) ou entre l'entrée et la sortie de la dérivation (8) une vanne de régulation (13) qui permet de doser la quantité de gaz dérivé passant par la dérivation (8), la partie non dérivée étant directement amenée à l'absorbeur (5).

4. Machine frigorifique à absorption selon la revendication 3, **caractérisée en ce que** la vanne de régulation est une vanne de passage direct (13) qui court-circuite la dérivation (8).

5. Machine frigorifique à absorption selon la revendication 3, **caractérisée en ce que** la vanne de régulation est un robinet à trois voies qui divise le mélange gazeux provenant de l'évaporateur (4) entre un flux destiné à la dérivation (8) et un flux destiné à l'absorbeur (5).

6. Machine frigorifique à absorption selon l'une quelconque des revendications précédentes, **caractérisée en ce que** la paroi intérieure du tuyau de dérivation est revêtue d'un matériau fibreux (17) résistant à l'ammoniaque.

7. Machine frigorifique à absorption selon la revendication 6, **caractérisée en ce que** le matériaux fibreux résistant à l'ammoniaque est formé d'une matte de fibres de verres (17).

8. Machine frigorifique à absorption selon la revendication 6 ou 7, **caractérisée en ce qu'**il est prévu à l'intérieur du tuyau de dérivation (8) un ressort hélicoïdal (18) disposé sur la paroi intérieure de celui-ci, le matériau fibreux résistant à l'ammoniaque (17) étant tendu entre la paroi intérieure et le ressort hélicoïdal (18).

9. Machine frigorifique à absorption selon l'une quelconque des revendications précédentes, **caractérisée en ce que** le réfrigérant est formé d'ammoniaque et le solvant d'eau.

10. Machine frigorifique à absorption selon l'une quelconque des revendications précédentes, **caractérisée en ce que** la dérivation (8) peut être chauffée.
